# EUROPEAN PATENT APPLICATION

(11) **EP 2 073 547 A1**
(43) Date of publication of application: **24.06.2009**
(21) Application number: 07829508.6
(22) Date of filing: 10.10.2007
(51) Int. Cl.: H04N 7/173, H04N 5/445

(54) **MOBILE INFORMATION TERMINAL DEVICE**

(30) Priority: 13.10.2006 JP 2006279456
(71) Applicant: Sharp Kabushiki Kaisha, Osaka-shi, Osaka 545-8522 (JP)
(72) Inventor: OKUDA, Kei, Hiroshima 739-0014 (JP); MOHRI, Takayuki, Hiroshima 739-0313 (JP)
(74) Representative: Müller - Hoffmann & Partner
(86) International application number: PCT/JP2007/069770
(87) International publication number: WO 2008/047648

(57) **Abstract**

It is an object to provide a mobile information terminal device capable of surely preventing erroneous determination that caption data is included in a digital TV broadcast wave for a program other than a closed-captioned broadcast program.

A PES generating part 13 combines a plurality of TS (Transport Stream) packets extracted from a digital TV broadcast wave on a data type basis to thereby generate a PES (Packetized Elementary Stream) including caption data. A caption management data detecting part 18 detects a presence or an absence of caption management data periodically included in the caption data, and on the basis of a result of the detection, a caption outputting part 16 outputs a caption. Based on this, in the case where a digital TV broadcast wave for a program other than a closed-captioned broadcast program is received, the caption can be controlled not to be outputted on the basis of a fact that the caption management data is not detected, and thereby erroneous determination that the digital TV broadcast wave includes the caption data can be surely prevented.

## Description

### TECHNICAL FIELD

The present invention relates to a mobile information terminal device, and more particularly, to improvement of a mobile information terminal device that enables a digital TV broadcast to be watched.

### BACKGROUND ART

Some of mobile information terminal devices such as a cellular phone are adapted to enable a digital TV broadcast to be watched by including an antenna for receiving a digital TV broadcast wave transmitted from a TV station; displaying a video on a display screen on the basis of the received digital TV broadcast wave; and outputting voice corresponding to the video.

As an example of this sort of mobile information terminal device, there is one adapted to be able to display a caption corresponding to a video of a digital TV broadcast on a display screen (e.g., Patent document 1). In the case where such mobile information terminal device is used to receive a digital TV broadcast wave for a closed-captioned broadcast program, a video display area and a caption display area are allocated to the display screen, and a video based on video data and a caption based on caption data included in the received digital TV broadcast wave are respectively displayed in the video display area and the caption display area.

The video data and the caption data are divided into a plurality of packets on a data type basis to be thereby transmitted as so-called TS (Transport Stream) packets. The mobile information terminal device having received the digital TV broadcast wave for a closed-captioned broadcast program extracts a plurality of TS packets from the digital TV broadcast wave, and combines the pluralities of TS packets for each of data types on the basis of a PID (Packet Identifier) included in each of the TS packets to thereby generate the video data and the caption data.

Note that a correspondence relationship between the data type such as the video data or the caption data and the PID is provided by a PMT (Program Map Table) including pieces of data different for each program. The PMT is periodically transmitted for each program from a TV station, and the TS packets are combined for each PID on the basis of the PMT, which is preliminarily received by the mobile information terminal device, to be thereby able to generate the video data and the caption data corresponding to the respective PIDs.

On the other hand, in the case where a digital TV broadcast wave for a program other than a closed-captioned broadcast program is received, a data broadcast display area for displaying information other than a caption, such as weather forecast, is allocated to the display screen instead of the caption display area to be thereby able to perform a data broadcast. As described, when the caption is not displayed, the data broadcast display area is allocated to the display screen instead of the caption display area to perform the broadcast of data other than the caption broadcast, and thereby an unnecessary display area can be prevented from being allocated and display can be efficiently performed on the display screen.
Patent document 1: Japanese Unexamined Patent Publication No. 2006-211431

### DISCLOSURE OF THE INVENTION

### PROBLEM TO BE SOLVED BY THE INVENTION

A conventional mobile information terminal device is adapted to allocate a caption display area to a display screen when a received PMT provides a PID for caption data. Accordingly, when a digital TV broadcast wave for a closed-captioned broadcast program is transmitted, a mobile information terminal device receives a PMT periodically transmitted correspondingly to the program to be thereby, on the basis of a PID for caption data provided in the PMT, brought into a state where the caption display area is constantly allocated to the display screen.

However, when a digital TV broadcast wave for a program other than a closed-caption broadcast program is transmitted, a PID for caption data may be erroneously provided in a PMT periodically transmitted correspondingly to the program. In such a case, the mobile information terminal device having received the PMT erroneously determines that the caption data is included in the received digital TV broadcast wave for the program other then the closed-captioned broadcast program, and is brought into a state where the caption display area is constantly displayed although no caption is displayed. In this case, during the program other than the closed-captioned broadcast program, an unnecessary caption display area is allocated to the display screen, and therefore display cannot be efficiently made on the display screen.

Accordingly, there is considered a configuration in which, on the basis of whether or not a caption to be displayed in the caption display area is included in caption data generated on the basis of a received digital TV broadcast wave, switching between display and nondisplay of the caption display area is performed. According to such a configuration, even if a PMT for the program other than the closed-captioned broadcast program provides a PID corresponding to the caption data, the caption display area can be hidden, and instead, the other display such as the data broadcast display area can be made.

However, in the configuration as described above, in the case where there is a time period during which a caption is not displayed, like a case where a commercial message is broadcasted during the closed-captioned broadcast program, there occurs a phenomenon that the caption display area is once switched to the other display such as the data broadcast display area, and upon termination of the time period, the other display is again switched to the caption display area. In this case, a display area allocated to the display screen is frequently switched, and therefore there arises a problem of difficulty in watching the display screen.

The present invention has been made in consideration of the above-described situations, and has an object to provide a mobile information terminal device capable of surely preventing erroneous determination that caption data is included in a digital TV broadcast wave for the program other than the closed-captioned broadcast program. Also, the present invention has an object to provide a mobile information terminal device capable of efficiently making a display on the display screen. Further, the present invention has an object to provide a mobile information terminal device capable of preventing difficulty in watching the display screen.

### MEANS ADAPTED TO SOLVE PROBLEMS

A mobile information terminal device according to a first aspect of the present invention is configured to include: digital TV broadcast receiving means adapted to receive a digital TV broadcast wave; packet extracting means adapted to extract a plurality of packets from the received digital TV broadcast wave; combined data generating means adapted to combine on a data type basis the plurality of packets extracted by the packet extracting means to thereby generate video data and caption data; caption outputting means adapted to output a caption on a basis of the caption data generated by the combined data generating means; and control information detecting means adapted to detect a presence or an absence of control information on the caption periodically included in the caption data generated by the combined data generating means, wherein the caption outputting means outputs the caption on a basis of a result of the detection by the control information detecting means.

According to such a configuration, the presence or the absence of the control information periodically included in the caption data can be detected, and the caption can be outputted on the basis of the result of the detection. Accordingly, in the case where the digital TV broadcast wave for a program other than a closed-captioned broadcast program is received, a caption can be controlled not to be outputted on the basis of a fact that the control information is not detected, and thereby an erroneous determination that the digital TV broadcast wave includes caption data can be surely prevented.

A mobile information terminal device according to a second aspect of the present invention is, in addition to the above configuration, configured to include display control means adapted to display the caption outputted by the caption outputting means in a caption display area, and on a basis of a result of the detection by said control information detecting means, display an image other than a caption in the caption display area.

According to such a configuration, the presence or the absence of the control information periodically included in the caption data can be detected, and the image other than a caption can be displayed in the caption display area on the basis of a result of the detection. Accordingly, when a digital TV broadcast wave for a program other than a closed-captioned broadcast program is received, the image other than the caption is displayed in the caption display area, and thereby display can be efficiently made on a display screen.

Also, on the basis of a result of the detection of the presence or the absence of the control information periodically included in the caption data, rather than the presence or the absence of the caption to be displayed in the caption display area, the image other than the caption can be displayed in the caption display area. Accordingly, in the case where there is a time period during which a caption is not displayed, like a case where a commercial message is broadcasted during a closed-captioned broadcast program, an image other than a caption can be prevented from being displayed in the caption display area on the basis of a detection result of the presence or the absence of the control information. Based on this, in the case where there is a time period during which the caption is not displayed, there is no possibility that display in the caption display area is once switched to the other display, and upon completion of the time period, the caption is again displayed in the caption display area, and therefore difficulty in watching the screen display can be prevented.

A mobile information terminal device according to a third aspect of the present invention is, in addition to the above configuration, configured such that the display control means displays a video based on the video data generated by the combined data generating means in a video display area, and on a basis of a result of the detection by the control information detecting means, displays the video based on the video data generated by the combined data generating means in a first display area formed of the video display area and the caption display area.

According to such a configuration, in the case where a digital TV broadcast wave for a program other than a closed-captioned broadcast program is received, a video based on video data can be displayed in the first display area formed of the video display area and the caption display area, on the basis of a detection result of a presence or an absence of the control information. Accordingly, when a digital TV broadcast wave for a program other than a closed-captioned broadcast program is received, a video based on video data is displayed not only in the video display area but in the first display area added with the caption display area, and therefore the video can be displayed in a wider area.

A mobile information terminal device according to a fourth aspect of the present invention is, in addition to the above configuration, configured such that the combined data generating means combines on a data type basis the plurality of packets extracted by the packet extracting means to thereby generate data for data broadcast different from the video data and the caption data; and the display control means displays an image based on the data for data broadcast generated by the combined data generating means in a data broadcast display area, and on a basis of a result of the detection by the control information detecting means, displays the image based on the data for data broadcast generated by the combined data generating means in a second display area formed of the caption display area and the data broadcast display area.

According to such a configuration, in the case where a digital TV broadcast wave for a program other than a closed-captioned broadcast program is received, an image based on data for data broadcast can be displayed in the second display area formed of the caption display area and the data broadcast display area, on the basis of a detection result of a presence or an absence of the control information. Accordingly, when the digital TV broadcast wave for the program other than the closed-captioned broadcast program is received, an image based on data for data broadcast is displayed not only in the data broadcast display area but in the second display area added with the caption display area, and therefore the image can be displayed in a wider area.

### EFFECT OF THE INVENTION

According to the present invention, by detecting a presence or an absence of control information on a caption periodically included in caption data, and on the basis of a result of the detection, outputting the caption, erroneous determination that caption data is included in a digital TV broadcast wave for a program other than a closed-captioned broadcast program can be surely prevented. Also, in the case where a digital TV broadcast wave for a program other than a closed-captioned broadcast program is received, an image other than a caption is displayed in a caption display area, and thereby display can be efficiently made on a display screen. Further, on the basis of the detection result of the presence or the absence of the control information periodically included in the caption data, rather than the presence or the absence of a caption to be displayed in the caption display area, an image other than a caption can be displayed in the caption display area, and thereby difficulty in watching a display screen can be surely prevented.

### BEST MODE FOR CARRYING OUT THE INVENTION

### First embodiment

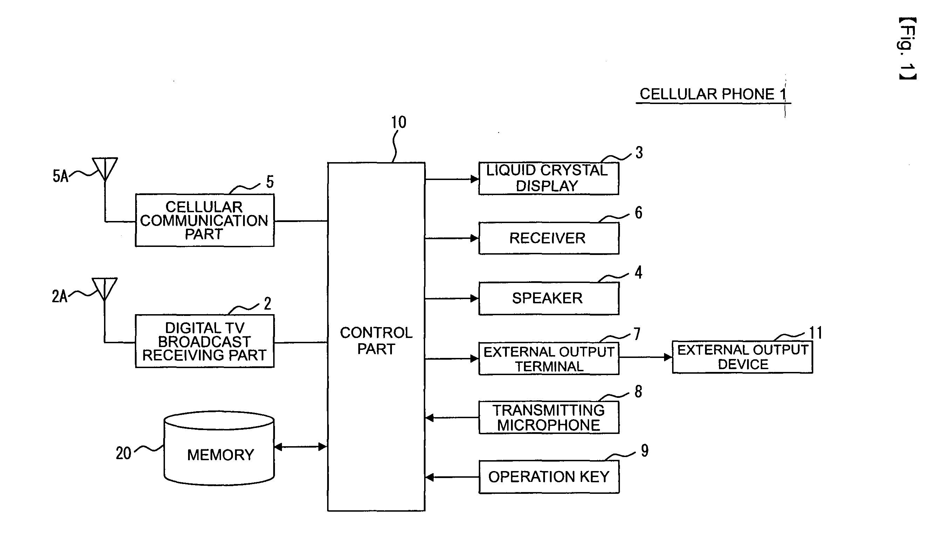

Fig. 1 is a block diagram illustrating an example of a mobile information terminal device according to a first embodiment of the present invention, in which a cellular phone 1 is illustrated as an example of the mobile information terminal device. The cellular phone 1 includes a digital TV broadcast receiving part 2 for receiving a digital TV broadcast wave from a TV antenna 2A, and is adapted to enable a digital TV broadcast to be watched by displaying a video on a display screen of a liquid crystal display 3 on the basis of the received digital TV broadcast wave, and outputting voice corresponding to the video from a speaker 4.

The cellular phone 1 includes, in addition to the above-described digital TV broadcast receiving part 2, the liquid crystal display 3, and the speaker 4, a cellular communication part 5, a receiver 6, an external output terminal 7, a transmitting microphone 8, an operation key 9, and a memory 20, and is adapted such that operations of them are controlled by a control part 10 including a processor. The external output terminal 7 may be attached with an external output device 11 such as an earphone as appropriate. The memory 20 includes a RAM (Random Access Memory) or ROM (Read Only Memory).

The cellular communication part 5 transmits/receives a radio wave to/from a base station through a communication antenna 5A to thereby transmit/receive call voice. Upon calling an opposite side telephone set, a user voice signal inputted from the transmitting microphone 8 is transmitted from the cellular communication part 5, and a voice signal from the opposite side telephone set is received by the cellular communication part 5 to output voice based on the voice signal from the receiver 6, under a condition that a communication state with the opposite side telephone set is established.

A digital TV broadcast wave received by the digital TV broadcast receiving part 2 is a one-segment broadcast wave for cellular phones, which is allocated to a certain band for a general digital high-vision broadcast wave, and includes, in addition to video data and voice data, caption data, data for data broadcast, and the like. Note that the caption data includes, in addition to a caption corresponding to a video, control information on the caption, and the like. Also, the data for data broadcast includes various pieces of information other than a caption, such as weather forecasts. Such pieces of data are divided into a plurality of packets on a data type basis to be thereby transmitted as so-called TS (Transport Stream) packets.

The digital TV broadcast receiving part 2 is provided with a tuner (not shown), and a user operates the operation key 9 to select a channel, and can thereby extract a plurality of TS packets from a digital TV broadcast wave corresponding to the channel. Then, the plurality of extracted TS packets are combined on the data type basis to generate various pieces of data such as video data, voice data, caption data, and data for data broadcast, and on the basis of such pieces of data, an image can be displayed on the display screen of the liquid crystal display 3, or voice can be outputted from the speaker 4 or the external output device 11.

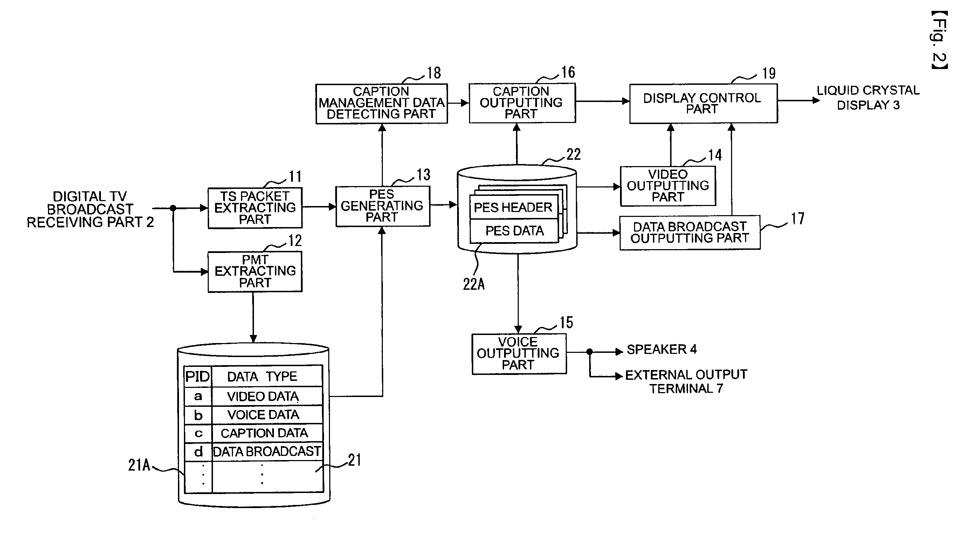

Fig. 2 is a functional block diagram illustrating one configuration example of the control part 10. The control part 10 includes a TS packet extracting part 11, a PMT extracting part 12, a PES generating part 13, a video outputting part 14, a voice outputting part 15, a caption outputting part 16, a data broadcast outputting part 17, a caption management data detecting part 18, and a display control part 19, and the respective functional blocks are embodied by a computer program executed by the control part 10. The memory 20 is allocated with a PMT storage part 21 and a PES storage part 22.

A digital TV broadcast wave periodically includes a PMT (Program Map Table) transmitted correspondingly to each program. The PMT provides a correspondence relationship between a data type of a TS packet and a PID (Packet Identifier) that is identification information corresponding to each data type. When a digital TV broadcast wave for some program is received, the PMT extracting part 12 extracts a PMT 21A corresponding to the program, which is periodically transmitted from a TV station, and then stores it in the PMT storage part 21. In general, the PMT 21A is transmitted in a period of 200 ms to 500 ms.

The TS packet extracting part 11 is packet extracting means adapted to extract a plurality of TS packets from a digital TV broadcast wave in receipt. The plurality of TS packets extracted in the TS packet extracting part 11 are separated on the basis of a PID in the PES generating part 13, and combines on the data type basis. At this time, the PES generating part 13 functions as combined data generating means adapted to compare the PMT 21A stored in the PMT storage part 21 with PIDs included in the respective TS packets to identify data types, and combine the TS packets on the data type basis. Based on this, a so-called PES (Packetized Elementary Stream) is generated on the data type basis, as a packet including video data, voice data, caption data, or data for data broadcast.

Data type based PESs 22A generated in the PES generating part 13 are stored in the PES storage part 22. Each of the PESs 22A includes a PES header and PES data, and as the PES data, includes video data, voice data, caption data, or data for data broadcast. Among the pieces of PES data of the PESs 22A stored in the PES storage part 22, the video data, voice data, caption data, and data for data broadcast are respectively read by the video outputting part 14, the voice outputting part 15, the caption outputting part 16, and the data broadcast outputting part 17.

The video outputting part 14 outputs a video on the basis of the video data read from the PES storage part 22, and the display control part 19 displays the video in a video display area on the display screen of the liquid crystal display 3. The caption outputting part 16 outputs a caption on the basis of the caption data read from the PES storage part 22, and the display control part 19 displays the caption in a caption display area on the display screen of the liquid crystal display 3. The data broadcast outputting part 17 outputs an image on the basis of the data for data broadcast read from the PES storage part 22, and the display control part 19 displays the image in a data broadcast display area on the display screen of the liquid crystal display 3. On the other hand, the voice outputting part 15 outputs voice to the speaker 4 or the external output terminal 7 on the basis of the voice data read from the PES storage part 22.

The caption management data detecting part 18 is a control information detecting means adapted to detect a presence or an absence of caption management data as control information on a caption included in caption data. When a digital TV broadcast wave for a closed-captioned broadcast program is received, the caption management data is typically generated in the PES generating part 13 at a period of once every 15 seconds or less. The caption management data is periodically generated at a constant period even if a caption is interrupted for a predetermined time period, like a case where a commercial message is broadcasted during a program. Accordingly, the caption management data detecting part 18 can detect the presence or the absence of the caption management data on the basis of whether or not the caption management data has been generated in the PES generating part 13 within a certain time period of approximately 15 seconds. By detecting the presence or the absence of caption management data in this manner, it can be determined whether or not a digital TV broadcast wave in receipt is for the closed-captioned broadcast program.

The caption outputting part 16 outputs the caption on the basis of a detection result by the caption management data detecting part 18. That is, in the case where the caption management data is detected within the above-described certain time period in the caption management data detecting part 18, a digital TV broadcast wave in receipt is determined as one for a closed-captioned broadcast program, and then the caption is outputted to the display control part 19. On the other hand, in the case where the caption management data is not detected within the above-described certain time period, the digital TV broadcast wave in receipt is determined as one not for a closed-captioned broadcast program, and any processing by the caption outputting part 16 is adapted not to be performed.

In the present embodiment, the presence or the absence of caption management data periodically included in the caption data is detected, and on the basis of a result of the detection, a caption can be outputted. Accordingly, in the case where a digital TV broadcast wave for a program other than the closed-captioned broadcast program is received, a caption can be controlled not to be outputted on the basis of a fact that the caption management data is not detected, and therefore erroneous determination that the digital TV broadcast wave includes the caption data can be surely prevented

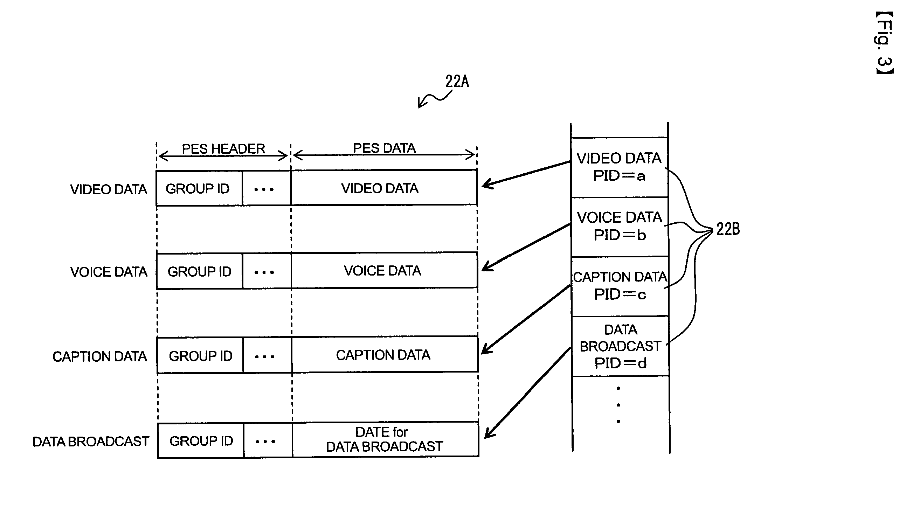

Fig. 3 is a diagram for describing an aspect at the time when the PESs 22A are generated on the basis of TS packets 22B. When a digital TV broadcast wave for a closed-captioned broadcast program is received, the TS packet 22B for caption data is extracted in addition to the TS packets 22B respectively for video data, voice data, and data for data broadcast, and these TS packets 22B are combined for each of the data types on the basis of PIDs to thereby generate the data type based PESs 22A.

In the example illustrated in Fig. 3, PIDs of "a", "b", "c", and "d" are assigned to the video data, the voice data, the caption data, and the data for data broadcast, respectively, and by combining, among the plurality of continuously extracted TS packets 22B, TS packets 22B of which PIDs are in common, the respective PESs 22A for the video data, the voice data, the caption data, and the data for data broadcast can be generated. Each of the PESs 22A generated in this manner includes the video data, the voice data, the caption data, or the data for data broadcast as PES data, as well as including a group ID representing a type of the PES data as the PES header.

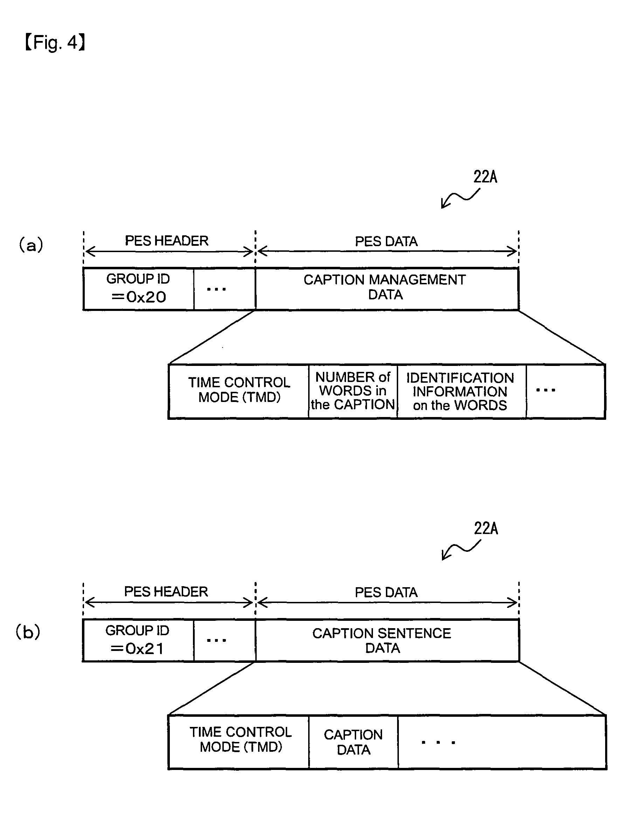

Fig. 4 is a diagram illustrating a specific content of the PES 22A, in which an example of the PES 22A for the caption data is illustrated. In the example of Fig. 4 (a), caption management data is carried as the PES data, and as the group ID, "0x20" is carried in the PES header. On the other hand, in the example of Fig. 4 (b), as the PES data, caption sentence data representing content of a caption is carried, and as the group ID, "0x21" is carried in the PES header. As described, in the PES 22A for the caption data, the group ID included in the PES header represents a type of the caption data carried in the corresponding PES 22A as the PES data.

In the example of Fig. 4 (a), as the caption data, the caption management data including: a time control mode (TMD) providing processing timing of the data; the number of words in the caption; identification information on the words; and the like is carried. On the other hand, in the example of Fig. 4 (b), as the caption data, the caption sentence data including: a time control mode (TMD) providing processing timing of the data; content of the caption; and the like is carried.

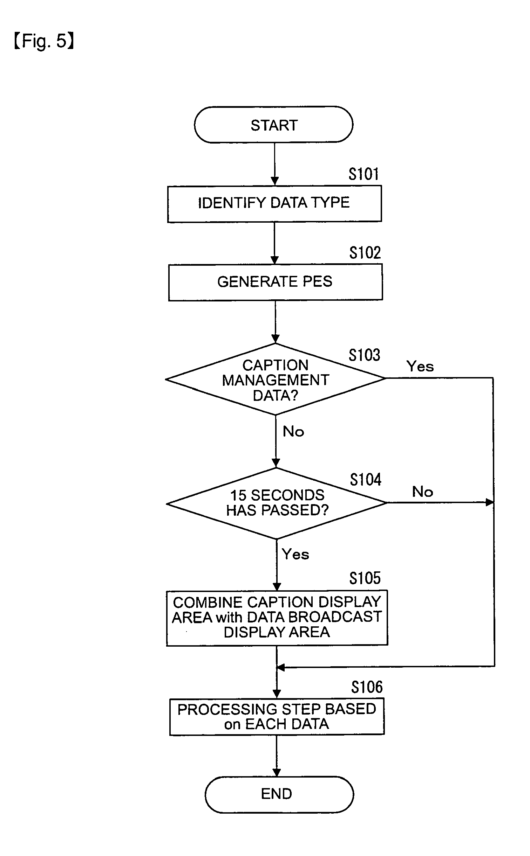

Fig. 5 is a flowchart illustrating an example of processing by the control part 10 upon extraction of the TS packets 22B from a digital TV broadcast wave. When the TS packets 22B are extracted from the digital TV broadcast wave, data types of the TS packets 22B are identified on the basis of a PMT 21A that is preliminarily extracted from a digital TV broadcast wave for the same program and stored in the PMT storage part 21 (Step S101). Then, a plurality of TS packets 22B of the same data type are combined, and thereby a PES 22A including the video data, the voice data, caption data, or the data for data broadcast is generated (Step S102).

In the case where the PES 22A generated in this manner includes caption management data (Yes in Step S103), a step of making caption settings is performed on the basis of the caption management data (Step S106). On the other hand, in the case where the PES 22A does not include caption management data, i.e., in the case where it includes caption sentence data as the caption data, or of the video data other than the caption data, the voice data, or the data for data broadcast (No in Step S103), it is determined whether or not the caption management data has been generated in 15 seconds or less (Step S104).

As a result of the above determination, in the case where the caption management data has been generated in 15 seconds or less (No in Step S104), a step based on the already generated PES 22A is performed without change (Step S106). That is, if the PES 22A includes the video data, a video based on the video data is displayed in the video display area of the liquid crystal display 3; or if it includes the caption sentence data, a caption based on the caption sentence data is displayed in the caption display area of the liquid crystal display 3; or if it includes the data for data broadcast, an image based on the data for data broadcast is displayed in the data broadcast display area of the liquid crystal display 3. Also, if the PES 22A includes the voice data, voice based on the voice data is outputted to the speaker 4 or the external output terminal 7.

On the other hand, in the case where the caption management data is not generated even after 15 seconds (Yes in Step S104), the caption display area of the liquid crystal display 3 is combined with the data broadcast display area to form one combined data broadcast display area (Step S105), and then the step based on the generated PES 22A is performed (Step S106). Accordingly, in the case where the PES 22A includes the data for data broadcast, the image based on the data for data broadcast is displayed in the above-described combined data broadcast display area.

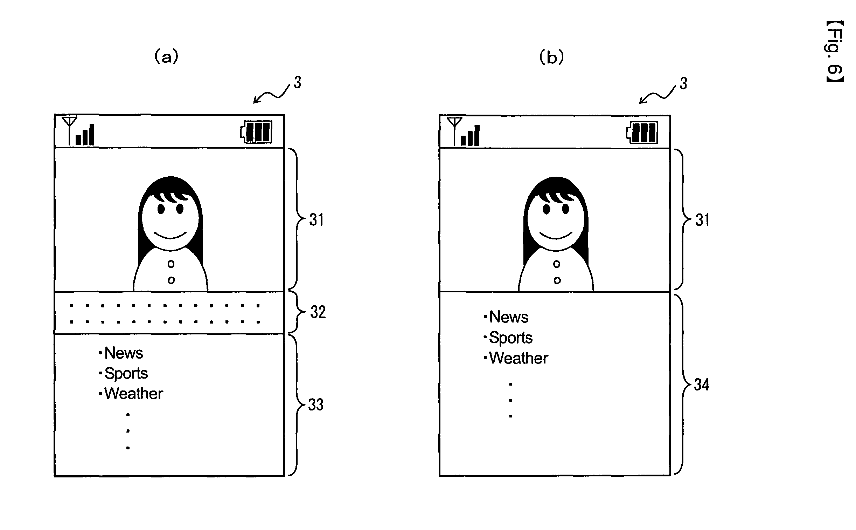

Fig. 6 is a diagram illustrating an example of display on the display screen of the liquid crystal display 3, in which (a) illustrates a case where a digital TV broadcast wave for a closed-captioned broadcast program is being received, and (b) a case where a digital TV broadcast wave for a program other than a closed-captioned broadcast program is being received. When the digital TV broadcast wave for the closed-captioned program is received, the video display area 31, the caption display area 32, and the data broadcast display area 33 are allocated to the display screen of the liquid crystal display 3 as illustrated in Fig. 6 (a). The video display area 31 is formed by horizontally arranging a rectangular area having a long to short side ratio of 16:9, and the long side thereof corresponds to a width of the display screen of the liquid crystal display 3. The horizontal to vertical ratio of the video display area 31 as described above coincides with an aspect ratio in a HDTV (High Definition Television) system used for a general digital high-vision broadcast.

On the other hand, when the digital TV broadcast wave for the program other than the closed-captioned broadcast program is received, the caption display area 32 is combined with the data broadcast display area 33 to generate the combined data broadcast display area 34 on the basis of a fact that caption management data is not generated during the certain time period, as illustrated in Fig. 6 (b). Based on this, the caption display area 32 is hidden, and an image based on data for data broadcast is displayed in the combined data broadcast display area 34 formed of a wider area than the data broadcast display area 33.

In the present embodiment, by detecting the presence or the absence of caption management data periodically included in caption data, and on the basis of a result of the detection, combining the caption display area 32 with the data broadcast display area 33, the image other than the caption can be displayed in the caption display area 32. Accordingly, in the case where the digital TV broadcast wave for the program other than the closed-captioned broadcast program is received, display can be efficiently made on the display screen by displaying an image other than a caption in the caption display area 32.

In particular, an image based on data for data broadcast can be displayed in the combined data broadcast display area 34 formed of the caption display area 32 and the data broadcast display area 33. Accordingly, when the digital TV broadcast wave for the program other than the closed-captioned broadcast program is received, an image based on data for data broadcast is displayed not only in the data broadcast display area 33 but in the combined data broadcast display area 34 added with the caption display area 32, and therefore the image can be displayed in the wider area.

Also, on the basis of a detection result of the presence or the absence of caption management data periodically included in the caption data, rather than the presence or the absence of a caption to be displayed in the caption display area 32, the image other than the caption can be displayed in the caption display area 32. Accordingly, when there is a time period during which the caption is not displayed, like a case where a commercial message is broadcasted during the closed-captioned broadcast program, the image other than the caption can be prevented from being displayed in the caption display area 32 on the basis of the detection result of the presence or the absence of the caption management data. Based on this, in the case where there is the time period during which a caption is not displayed, there is no possibility that display in the caption display area 32 is once switched to the other display, and upon completion of the time period, the caption is again displayed in the caption display area 32, and therefore difficulty in watching the screen display can be prevented.

### Second embodiment

In the first embodiment, the configuration in which the caption display area 32 is combined with the data broadcast display area 33 is described. On the other hand, a different point in a second embodiment is that the caption display area 32 is combined with the video display area 31, and the rest of the configuration excluding this point is the same as that in the first embodiment. Accordingly, in a following description, the same part of the configuration as that in the first embodiment is described with use of the same reference symbols, and detailed description thereof is omitted.

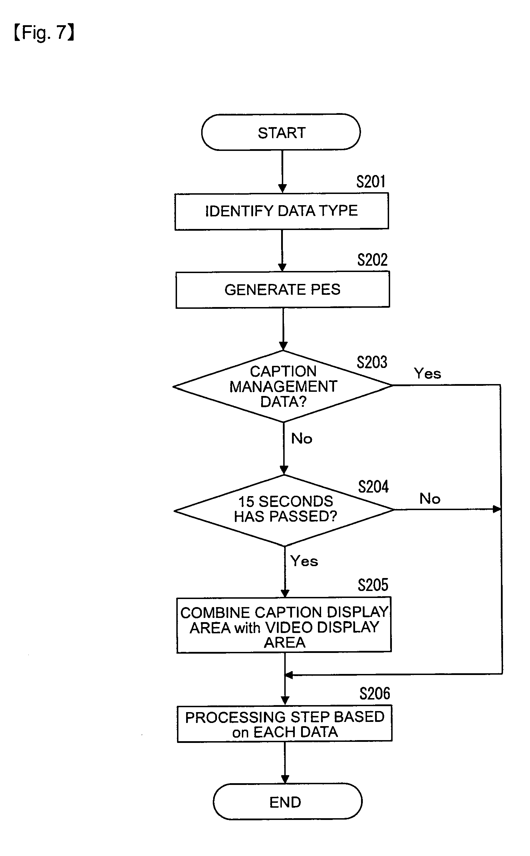

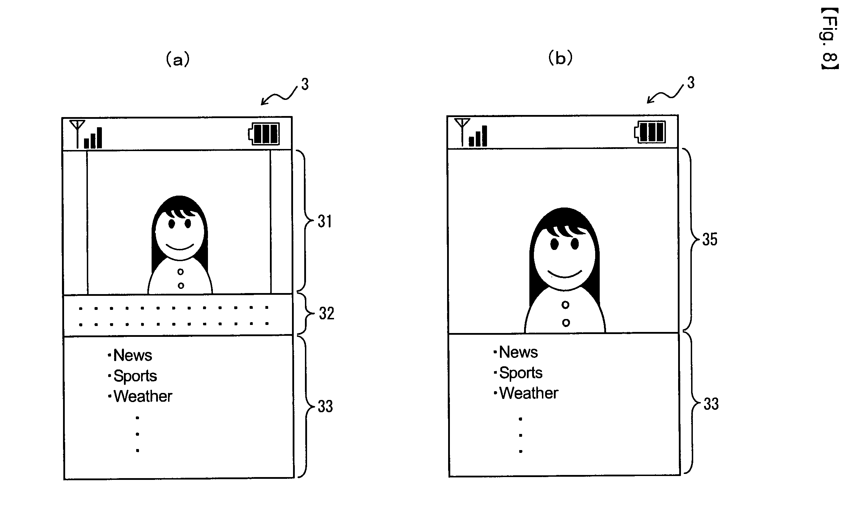

Fig. 7 is a flowchart illustrating an example of processing performed when the control part 10 of a mobile information terminal device according to the second embodiment of the present invention extracts TS packets 22B from the digital TV broadcast wave. Also, Fig. 8 is a diagram illustrating an example of display on the display screen of the liquid crystal display 3, in which (a) illustrates a case where the digital TV broadcast wave for the closed-captioned broadcast program is being received, and (b) a case where a digital TV broadcast wave for the program other than the closed-captioned broadcast program is being received. Processing steps in Steps S201 to S204 and S206 illustrated in Fig. 7 are the same as those in Steps S101 to S104 and S106 of the first embodiment illustrated in Fig. 5.

That is, when the TS packets 22B are extracted from the digital TV broadcast wave, data types of the TS packets 22B are identified on the basis of the PMT 21A (Step S201), and a plurality of TS packets 22B of the same data type are combined to thereby generate a PES 22A (Step S202), similarly to the first embodiment. Then, in the case where the PES 22A includes caption management data (Yes in Step S203), or in the case where the PES 22A including data other than the caption management data, and the caption management data has been generated in 15 seconds or less (No in Step S204), the processing step based on the PES 22A is performed without change (Step S206).

On the other hand, in the case where the caption management data is not generated even after 15 seconds (Yes in Step S204), the caption display area 32 of the liquid crystal display 3 is combined with the video display area 31 to form one combined video display area 35 in the present embodiment (Step S205), and then the processing step based on the generated PES 22A is performed (Step S206). Accordingly, in the case where the PES 22A includes the video data, a video based on the video data is displayed in the above-described combined video display area 35.

This example is adapted such that a rectangular area having a long to short side ratio of 4:3 is horizontally formed in the video display area 31, and the video based on the video data is able to be displayed in the area. In this case, as illustrated in Fig. 8 (a), the short side of the above-described rectangular area corresponds to a short side of the video display area 31, and areas in which no video is displayed are formed on the left and right sides of the rectangular area. A horizontal to vertical ratio of the above-described rectangular area coincides with an aspect ratio in a so-called SDTV (Standard Definition Television) system. In the case of such a configuration, by setting a long to short side ratio of the combined video display area 35 to 4:3, the video based on the video data can be displayed in the entire combined video display area 35 as illustrated in Fig. 8 (b).

In the present embodiment, in the case where a digital TV broadcast wave for the program other than the closed-captioned broadcast program is received, a video based on video data can be displayed in the combined video display area 35 formed of the video display area 31 and the caption display area 32 on the basis of a detection result of the presence or the absence of caption management data. Accordingly, when the digital TV broadcast wave for the program other than the closed-captioned broadcast program is received, the video based on the video data is displayed not only in the video display area 31 but in the combined video display area 35 added with the caption display area 32, and therefore the image can be displayed in a wider area.

In the above embodiments, the configuration in which the caption display area 32 is combined with the video display area 31 or the data broadcast display area 33 is described; however, without limitation to such configurations, the video based on the video data, or an image based on data for data broadcast may be adapted to be displayed in the caption display area 32 separated from the video display area 31 or the data broadcast display area 33. Also, without limitation to the configuration in which the video based on the video data, or the image based on the data for data broadcast is displayed in the caption display area 32 when the digital TV broadcast wave for the program other than the closed-caption broadcast program is received, any configuration in which the image other than the caption is displayed may be employed.

Also, in the above embodiments, as an example of the mobile information terminal device, the cellular phone 1 is described; however, without limitation to the cellular phone 1, the present invention may be applied to the other mobile information terminal device such as a mobile personal computer, or PDA (Personal Digital Assistance).

This application claims priority from the Japanese patent application (Japanese published unexamined patent application No. 2006-279456) filed on October 13, 2006 under the Paris Convention, and the entire content of the patent application is incorporated herein by reference.

### BRIEF DESCRIPTION OF THE DRAWINGS

[Fig. 1] Fig. 1 is a block diagram illustrating an example of a mobile information terminal device according to a first embodiment of the present invention, in which a cellular phone is illustrated as the example of the mobile information terminal device.
[Fig. 2] Fig. 2 is a functional block diagram illustrating one configuration example of a control part.
[Fig. 3] Fig. 3 is a diagram for describing an aspect at the time when a PES is generated on the basis of a TS packet.
[Fig. 4] Fig. 4 is a diagram illustrating a specific content of the PES, in which an example of the PES for caption data is illustrated.
[Fig. 5] Fig. 5 is a flowchart illustrating an example of processing by the control part upon extraction of TS packets from a digital TV broadcast wave.
[Fig. 6] Fig. 6 is a diagram illustrating an example of display on a display screen of a liquid crystal display, in which (a) illustrates a case where a digital TV broadcast wave for a closed-captioned broadcast program is being received, and (b) a case where a digital TV broadcast wave for the program other than the closed-captioned broadcast program is being received.
[Fig. 7] Fig. 7 is a flowchart illustrating an example of processing performed when a control part of a mobile information terminal device according to a second embodiment of the present invention extracts the TS packets from the digital TV broadcast wave.
[Fig. 8] Fig. 8 is a diagram illustrating an example of display on a display screen of a liquid crystal display, in which (a) illustrates the case where the digital TV broadcast wave for the closed-captioned broadcast program is being received, and (b) the case where the digital TV broadcast wave for the program other than a closed-captioned broadcast program is being received.

### DESCRIPTION OF REFERENCE NUMERALS

- 1: Cellular phone
- 2: Digital TV broadcast receiving part
- 3: Liquid crystal display
- 10: Control part
- 11: TS packet extracting part
- 12: PMT extracting part
- 13: PES generating part
- 14: Video outputting part
- 15: Voice outputting part
- 16: Caption outputting part
- 17: Data broadcast outputting part
- 18: Caption management data detecting part
- 19: Display control part
- 20: Memory
- 21: PMT storage part
- 22: PES storage part
- 22A: PESs
- 22B: TS packets n
- 31: Video display area
- 32: Caption display area
- 33: Data broadcast display area
- 34: Combined data broadcast display area
- 35: Combined video display area

## Claims

1. A mobile information terminal device comprising:
digital TV broadcast receiving means adapted to receive a digital TV broadcast wave;
packet extracting means adapted to extract a plurality of packets from the received digital TV broadcast wave;
combined data generating means adapted to combine on a data type basis the plurality of packets extracted by said packet extracting means to thereby generate video data and caption data;
caption outputting means adapted to output a caption on a basis of the caption data generated by said combined data generating means; and
control information detecting means adapted to detect a presence or an absence of control information on the caption periodically included in the caption data generated by said combined data generating means, wherein
said caption outputting means outputs the caption on a basis of a result of the detection by said control information detecting means.

2. The mobile information terminal device according to claim 1, comprising:
display control means adapted to display the caption outputted by said caption outputting means in a caption display area, and on a basis of a result of the detection by said control information detecting means, display an image other than the caption in said caption display area.

3. The mobile information terminal device according to claim 2, wherein
said display control means displays a video based on the video data generated by said combined data generating means in a video display area, and on a basis of a result of the detection by said control information detecting means, displays the video based on the video data generated by said combined data generating means in a first display area formed of said video display area and said caption display area.

4. The mobile information terminal device according to claim 2, wherein
said combined data generating means combines on a data type basis the plurality of packets extracted by said packet extracting means to thereby generate data for data broadcast different from said video data and said caption data; and
said display control means displays an image based on the data for data broadcast generated by said combined data generating means in a data broadcast display area, and on a basis of a result of the detection by said control information detecting means, displays the image based on the data for data broadcast generated by said combined data generating means in a second display area formed of said caption display area and said data broadcast display area.
